# FASCICULE DE BREVET EUROPEEN

(11) **EP 3 855 929 B1**
(45) Date de publication et mention de la délivrance du brevet: **07.01.2026**
(21) Numéro de dépôt: 19795259.1
(22) Date de dépôt: 25.09.2019
(51) Int. Cl.: A23G 1/00, A23G 1/44

(54) **CHOCOLAT ENRICHI EN PROTEINES ET SON PROCEDE DE PREPARATION**
MIT PROTEIN ANGEREICHERTE SCHOKOLADE UND VERFAHREN ZU IHRER HERSTELLUNG
PROTEIN-ENRICHED CHOCOLATE, AND METHOD FOR PRODUCING SAME

(30) Priorité: 27.09.2018 FR 1858925
(43) Date de publication de la demande: 04.08.2021
(73) Titulaire: ROQUETTE FRERES, 62136 Lestrem (FR)
(72) Inventeur: CHOROMANSKY, Pierre, 59100 ROUBAIX (FR); LAGACHE, Sylvie, 59700 MARCQ EN BAROEUL (FR); RAIMBAULT, Camille, 59130 LAMBERSART (FR); GIRARD, Sophie, 62000 ARRAS (FR)
(74) Mandataire: Plasseraud IP
(86) Numéro de dépôt international: PCT/FR2019/052246
(87) Numéro de publication internationale: WO 2020/065207

(56) Documents cités:
- EP-A2- 2 531 041
- EP-B1- 2 531 041
- RO-B1- 114 728
- US-A- 4 296 141
- US-A1- 2003 170 346
- US-A1- 2009 181 145

## Description

### SUJET DE L'INVENTION

La présente invention a pour objet des produits chocolatés ayant une teneur accrue en protéines et possédant néanmoins une excellente qualité organoleptique, en particulier sans sensation sableuse, pâteuse lors de la dégustation. La présente invention se rapporte également à un procédé de fabrication de tels types de produits chocolatés.

### ETAT DE L'ART ANTERIEUR

Le chocolat est une confiserie sucrée produite à partir des fèves de cacao qui sont nettoyées, fermentées, torréfiées, concassées et broyées pour donner la pâte de cacao. De cette pâte de cacao sont extraits par pression d'une part la matière grasse également appelée beurre de cacao, et d'autre part les tourteaux servant eux-mêmes à la fabrication de la poudre de cacao.

Les constituants de base du chocolat au lait sont la pâte de cacao, le beurre de cacao, le sucre et les composés lactés sous différente forme : le lait lui-même ou les composés provenant de la déshydratation partielle ou entière du lait entier ou du lait partiellement ou entièrement écrémé et éventuellement de crème, de crème partiellement ou entièrement déshydratée, de beurre ou de graisse butyrique. Il est en outre procédé à des ajouts de lécithine et parfois d'arômes.

La réalisation de chocolat passe par un mélange des différents ingrédients qui est réalisé dans un pétrin à une température voisine de 50°C, suivi d'un broyage-affinage conférant au chocolat sa finesse, d'un conchage et d'un tempérage. Le conchage est encore actuellement une étape très importante de la fabrication du chocolat. Il permet entre autre d'obtenir une diminution de la teneur en eau de la pâte et favorise la formation de composés aromatiques résultant de la réaction de Maillard, composés conférant des notes sensorielles particulières au chocolat, et de distribuer la matière grasse autour de la phase sèche afin d'obtenir une certaine fluidité. Le tempérage consiste à amener le beurre de cacao sous sa forme cristalline la plus stable et donne au chocolat un aspect brillant et lisse, une dureté et un fondant caractéristique, ainsi qu'une plus longue durée de conservation. Typiquement le tempérage est l'étape de fabrication du chocolat où la pâte est chauffée et amenée à la température adéquate (par exemple entre 30 et 45 °C) permettant la cristallisation très fine du chocolat en lui donnant un aspect brillant, une texture croquante et fondante.

La Directive européenne 2000/36/CE décerne la dénomination « chocolat » à un produit obtenu à partir de produits de cacao et de sucres contenant pas moins de 35 % de matière sèche totale de cacao, dont pas moins de 18 % de beurre de cacao et pas moins 14 % de cacao sec dégraissé.

Il est néanmoins possible d'ajouter de façon facultative d'autres ingrédients, tels les protéines de lait ou végétales, dans la limite max de 40% du poids sec total du chocolat en tant que produit fini.

L'enrichissement de chocolat avec des protéines répond à une attente nutritionnelle de plus en plus importante des consommateurs. Hélas, le procédé classique de préparation du chocolat décrit ci-dessus permet l'obtention de chocolat enrichi en protéines, mais la qualité organoleptique est fortement dégradée par rapport au chocolat standard, en particulier avec l'apparition d'une sensation granuleuse lors de la dégustation et un goût prononcé de protéines, particulièrement en utilisant une protéine de soja.

La Demanderesse avait déjà proposé un chocolat enrichi en protéines dans son brevet EP 2 531 041. L'exemple 1 de celui-ci propose un chocolat enrichi à 16,4% avec des protéines de pois. La qualité organoleptique est jugée excellente, en effet aucune différence entre témoin et chocolat enrichi en protéines n'est observée. Malheureusement, lorsque l'on cherche à augmenter ce taux de protéines au-dessus de 30% de protéines afin de revendiquer un produit « enrichi en protéines » l'expérience nous montre qu'une sensation sableuse apparaisse lors de la dégustation.

Le brevet US 4 493 853 propose un enrichissement par ajout de fromage fondu, riche en protéines, dans un ratio en poids 10/10 à 15/10. Là aussi la qualité organoleptique est au rendez-vous mais l'enrichissement ne dépasse pas les 20% de protéines (cf revendication 13). Cette solution n'est de plus pas adaptée à la population végétarienne ou flexitarienne qui ne cesse de grandir.

Il existe donc un besoin insatisfait pour l'homme de métier de la confiserie de disposer d'un chocolat enrichi à plus de 20% en poids sec de protéines ou présentant plus de 20 % en poids sec de protéines, préférentiellement de protéines végétales, ayant une qualité organoleptique similaire au chocolat standard, en particulier une absence de sensation sableuse ou sèche lors de la dégustation, et d'un procédé permettant de le produire industriellement.

### DESCRIPTION DE L'INVENTION

La présente invention est définie par les revendications.

Un premier objet de cette invention est donc un chocolat enrichi en protéines comprenant :
- entre 20% et 40% de protéines, et
- entre 5 et 25% de beurre de cacao,

% exprimés en poids sec par rapport au poids sec total du chocolat enrichi en protéines, lesdites protéines étant des protéines de légumineuses ou un mélange de protéines de légumineuses et de protéines d'origines laitières, ledit chocolat présentant une viscosité Casson inférieure à 6 Pa.s, caractérisé en ce qu'il possède une excellente qualité organoleptique, en particulier sans sensation sableuse ou pâteuse lors de la dégustation, avec une présence limitée d'arôme pois.

Dans un mode préféré de l'invention, le chocolat enrichi en protéines contenant entre 20% et 40%, préférentiellement entre 25 et 35% en poids sec de protéines par rapport au poids sec total du produit fini ne contient que des protéines végétales, encore plus préférentiellement uniquement des protéines de pois.

Dans un mode préféré alternatif, le chocolat enrichi en protéines contenant entre 20% et 40%, préférentiellement entre 25 et 35% en poids sec de protéines par rapport au poids sec total du chocolat enrichi en protéines, du produit fini, contient un mélange de protéines végétales et de protéines d'origines laitières, encore plus préférentiellement des protéines de lactosérum. Le ratio en poids protéines végétales / protéines laitières est compris entre 40% et 60%, préférentiellement entre 45% et 55%.

Le chocolat enrichi en protéines selon l'invention est caractérisé également en ce que sa viscosité Casson est inférieure à 6 Pa.s, plus particulièrement comprise entre 1 et 6 Pa.s, préférentiellement entre 3 et 6 Pa.s.

Un second objet de cette invention est un procédé permettant l'obtention du chocolat enrichi en protéines tel que défini par le premier objet de cette invention caractérisé en ce qu'il comprend l'enchainement des étapes :
1. Réalisation d'un premier mélange composé
   ∘ d'une partie de la quantité totale du beurre de cacao mise en œuvre dans le procédé ;
   ∘ et d'une quantité de protéines de manière à obtenir une teneur finale en protéines comprise entre 20% et 40%, préférentiellement entre 25 et 35% en poids sec de protéines par rapport au poids total sec du chocolat enrichi en protéines, du produit fini
2. Broyage du premier mélange par passage sur broyeur adapté à l'affinage de chocolat, préférentiellement un appareillage dit bi ou tri-cylindre
3. Réalisation d'un second mélange composé
   ∘ d'une quantité de chocolat représentant entre 30% et 50%, préférentiellement entre 35% et 45% du poids total sec du chocolat enrichi en protéines
   ∘ et de la quantité restante du beurre de cacao, après mise en œuvre de la quantité de l'étape 1
4. Chauffage des deux mélanges à environ 60°C de manière à obtenir la fonte des mélanges, deux mélanges homogènes
5. Mélange intime des deux mélanges à 60°C, préférentiellement pendant un temps compris entre 1 heure et 5 heures, plus préférentiellement entre 2h et 4h, encore plus préférentiellement pendant 3,5 heures
6. Refroidissement à 50°C de la température du mélange obtenu à l'étape 5 et ajout d'un ou de plusieurs émulsifiants, préférentiellement de la lécithine végétale
7. Tempérage du mélange
8. Coulage du mélange dans les moules, c'est-à-dire mise œuvre selon utilisation, préférentiellement tablettage ou enrobage

La quantité totale de beurre de cacao étant comprise entre 5% et 25% en poids par rapport au poids total du chocolat enrichi en protéines, préférentiellement entre 8% et 21%, encore plus préférentiellement entre 11% et 17%.

### DESCRIPTION DETAILLEE DE L'INVENTION

Dans la présente invention, « Chocolat » doit se comprendre comme un aliment plus ou moins sucré produit à partir de la fève de cacao. Celle-ci est fermentée, torréfiée, broyée jusqu'à former une pâte de cacao liquide dont est extraite la matière grasse appelée beurre de cacao. Le chocolat est constitué du mélange, dans des proportions variables, de pâte de cacao, de beurre de cacao et de sucre ; auxquels sont ajoutées éventuellement des épices, comme la vanille, ou des matières grasses végétales. La Directive Européenne 2000/36/CE précise les requis en terme de composition afin d'obtenir la dénomination « chocolat » ou « chocolat au lait » sur les territoires de la Communauté Européen. Le terme « chocolat » dans la présente demande comprend aussi bien le chocolat, produit obtenu à partir de produits de cacao, en poudre et de sucres contenant pas moins de 35% de matière sèche totale de cacao, dont pas moins de 18 % de beurre de cacao et pas moins de 14% de cacao sec dégraissé, les flocons de chocolat, les chocolat de couverture, le chocolat aux noisettes gianduja, mais aussi le chocolat au lait.

Dans la présente invention, « protéine » doit se comprendre comme les macromolécules formées d'une ou de plusieurs chaînes polypeptidiques constituées de l'enchaînement de résidus d'acides aminés liés entre eux par des liaisons peptidiques. Les protéines sont d'origines végétales lorsqu'elles proviennent de l'extraction de sources végétales, par exemple les légumineuses. Par « légumineuses », on entend au sens de la présente invention toutes plantes appartenant aux familles des césalpiniacées, des mimosacées ou des papilionacées, comme la luzerne, le trèfle, le lupin, le pois, le haricot, la fève, la fèverole, la lentille.

Le terme « pois » est ici considéré dans son acception la plus large et incluant en particulier toutes les variétés de « pois lisse » (« smooth pea ») et « de pois ridés » (« wrinkled pea »), et toutes les variétés mutantes de « pois lisse » et de « pois ridé » et ce, quelles que soient les utilisations auxquelles on destine généralement lesdites variétés (alimentation humaine, nutrition animale et/ou autres utilisations). Le terme « pois » dans la présente demande inclut les variétés de pois appartenant au genre Pisum et plus particulièrement aux espèces sativum et aestivum. Les dites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87. Les protéines de pois sont constituées, comme toutes les protéines de légumineuses, de trois classes de protéines principales : les globulines, les albumines et les protéines dites insolubles.

Le terme « chocolat enrichi en protéines » dans la présente invention doit se comprendre comme un chocolat contenant entre 20% et 40%, préférentiellement entre 25 et 35% en poids sec de protéines par rapport au poids sec total du chocolat enrichi en protéines, du produit fini. L'intérêt des protéines de pois réside dans leurs bonnes capacités émulsifiantes, leur absence d'allergénicité, et leur faible coût, ce qui en fait un ingrédient fonctionnel économique. De plus, les protéines de pois participent favorablement au développement durable et leur impact carbone est très positif. En effet, la culture du pois est respectueuse de l'environnement, et ne nécessite pas d'engrais azotés, car le pois fixe l'azote de l'air atmosphérique.

Dans le cadre particulier des protéines de pois, la présente invention concerne plus particulièrement les globulines (environ 50-60% en poids sec des protéines du pois) et les albumines (20-25% en poids sec des protéines du pois). Les globulines de pois se subdivisent principalement en trois sous-familles les légumines, les vicilines et les convicilines.

Un premier objet de cette invention est donc un chocolat enrichi en protéines comprenant : -entre 20% et 40% de protéines, et -entre 5 et 25% de beurre de cacao, % exprimés en poids sec par rapport au poids sec total du chocolat enrichi en protéines, lesdites protéines étant des protéines de légumineuses ou un mélange de protéines de légumineuses et de protéines d'origine laitières, -ledit chocolat présentant une viscosité Casson inférieure à 6 Pa.s,
caractérisé en ce qu'il possède une excellente qualité organoleptique, en particulier sans sensation sableuse
ou pâteuse lors de la dégustation, avec une présence limitée d'arôme pois.

Dans un mode préféré de l'invention, le chocolat enrichi en protéines contenant entre 20% et 40%, préférentiellement entre 25 et 35% en poids sec de protéines par rapport au poids sec total du chocolat enrichi en protéines, du produit fini ne contient que des protéines végétales, encore plus préférentiellement uniquement des protéines de pois.

Dans un mode préféré alternatif, le chocolat enrichi en protéines contenant entre 20% et 40%, préférentiellement entre 25 et 35% en poids sec de protéines par rapport au poids sec total du chocolat enrichi en protéines, du produit fini contient un mélange de protéines végétales et de protéines d'origines laitières, encore plus préférentiellement des protéines de lactosérum. Le ratio en poids protéines végétales / protéines animales est compris entre 40% et 60%, préférentiellement entre 45% et 55%.

Par « qualité organoleptique », on comprendra l'ensemble des stimuli qui se rapportent à la sphère sensorielle goût, flaveur, odeur et consécutif à la dégustation d'un aliment.

Lorsque l'on réalise un chocolat contenant entre 20% et 40%, préférentiellement entre 25 et 35% en poids sec de protéines par rapport au poids sec total du produit fini avec les procédés classiques de la chocolaterie c.à.d. en incluant les protéines dès le début de la recette, dès le début du procédé avec l'ensemble des autres ingrédients, on obtient un chocolat qui, lorsqu'il est dégusté, possède une mauvaise qualité organoleptique, en particulier avec une sensation sableuse ou pâteuse lors de la dégustation, avec un goût pois prononcé.

Le chocolat produit par le procédé selon l'invention possède une excellente qualité organoleptique, en particulier sans sensation sableuse ou pâteuse lors de la dégustation, avec une présence limitée d'arôme pois. Le procédé selon l'invention permet la production d'un chocolat qui ne développe pas l'apparition d'une sensation sableuse. Ce chocolat est donc unique, et bien qu'étant fortement recherché par les experts de l'art antérieur, aucune solution antérieure à la meilleure connaissance de la demanderesse ne permettait de la préparer.

Ce chocolat est bien évidement d'intérêt pour une consommation directe mais également pour inclusion dans diverses recettes telles que les boissons, les gâteaux, les barres céréalières, le chocolat d'enrobage, le chocolat de remplissage (filling). Cette liste n'est aucunement limitative et le chocolat selon l'invention permet son inclusion dans toutes applications industrielles, principalement alimentaires. Le chocolat objet de la présente invention ou obtenu selon le procédé objet de la présente invention est du chocolat noir, mais peut aussi être du chocolat aux noisettes gianduja ou du chocolat au lait.

Dans la mesure où au moins 12% de la valeur énergétique du chocolat enrichi en protéines objet de la présente invention ou obtenu selon le procédé objet de la présente invention est fournie par des protéines, ce chocolat pourra bénéficier de l'allégation « source de protéines ». Plus particulièrement, dans la mesure où au moins 20% de la valeur énergétique du chocolat enrichi en protéines objet de la présente invention ou obtenu selon le procédé objet de la présente invention est fournie par des protéines, ce chocolat pourra bénéficier de l'allégation « riche en protéines ».

Le chocolat enrichi en protéines selon l'invention est caractérisé également en ce que sa viscosité Casson est inférieure à 6 Pa.s, plus particulièrement comprise entre 1 et 6 Pa.s, préférentiellement entre 3 et 6 Pa.s.

La rhéologie du chocolat est importante pour obtenir des produits de haute qualité avec une texture bien définie. Le chocolat fondu représente une suspension majoritairement composée de particules solides de sucre et de cacao, réduites en taille par affinage en rouleaux à 30 µm, dans une matrice liquide composée principalement de beurre de cacao. Rhéologiquement, le chocolat fondu présente un comportement non-newtonien qui est traditionnellement défini par un seuil d'écoulement et une viscosité. Le seuil d'écoulement correspond à la quantité d'énergie nécessaire pour initier l'écoulement du chocolat et la viscosité est la résistance qu'oppose un fluide au déplacement de ses particules les unes par rapport aux autres. Ces propriétés dépendent à la fois de la composition du chocolat, mais également de son procédé de fabrication. Elles régissent bien évidement la facilité à manipuler le chocolat (p.e. le tranport dans des tutyauteries ou son coulage dans des moules) mais également ses propriétés intrinsèques finales (p.e. fonte en bouche). À ce titre, le contrôle des propriétés rhéologiques du chocolat est primordial. Dans le livre référence en confiserie « Guide technologique de la confiserie industrielle », on trouve ainsi une valeur de 1000 mPa.s, soit 1Pa.s comme valeur de viscosité pour un chocolat de couverture titrant 34-37% de matière grasse.

La méthodologie référence en chocolaterie de mesure de la viscosité est la méthodologie dite Casson. Elle est décrite dans la norme dite ICA 46 éditée par l'International Confectionery Association (ICA, anciennement IOCCC). Celle-ci suggère l'utilisation combinée de viscosimètres rotatifs avec cylindres concentriques avec mesure de la contrainte et de la viscosité à des vitesses de cisaillement comprises entre 2 s-1 et 50 s-1 et courbes descendantes précédées d'une pré-écoute à 5 s-1 de >5 min et de l'équation de régression dite Casson.

Un second objet de cette invention est un procédé permettant l'obtention du chocolat enrichi en protéines tel que défini par le premier objet de cette invention. Ce procédé a pour particularité que les protéines sont ajoutées à du beurre de cacao puis ce mélange (protéines /Beurre de cacao) après avoir été broyé et chauffé, est ajouté aux autres ingrédients constituant le chocolat enrichi en protéines. Plus particulièrement, le procédé objet de la présente invention est caractérisé en ce qu'il consiste en l'enchainement des étapes :
1. Réalisation d'un premier mélange composé
   ∘ d'une partie de la quantité totale du beurre de cacao mise en œuvre dans le procédé ;
   ∘ et d'une quantité de protéines de manière à obtenir une teneur finale en protéines comprise entre 20% et 40%, préférentiellement entre 25 et 35% en poids sec de protéines par rapport au poids total sec du chocolat enrichi en protéines, du produit fini
2. Broyage du premier mélange par passage sur broyeur adapté à l'affinage de chocolat, préférentiellement un appareillage dit bi ou tri-cylindre
3. Réalisation d'un second mélange composé
   ∘ d'une quantité de chocolat représentant entre 30% et 50%, préférentiellement entre 35% et 45% du poids total sec du chocolat enrichi en protéines
   ∘ et de la quantité restante du beurre de cacao, après mise en oeuvre de la quantité de l'étape 1
4. Chauffage des deux mélanges à environ 60°C de manière à obtenir la fonte des mélanges, deux mélanges homogènes
5. Mélange intime des deux mélanges à 60°C, préférentiellement pendant un temps compris entre 1 heure et 5 heures, plus préférentiellement entre 2h et 4h, encore plus préférentiellement pendant 3,5 heures
6. Refroidissement à 50°C de la température du mélange obtenu à l'étape 5 et ajout d'un ou de plusieurs émulsifiants, préférentiellement de la lécithine végétale
7. Tempérage du mélange
8. Coulage du mélange dans les moules, c'est-à-dire mise œuvre selon utilisation, préférentiellement tablettage ou enrobage

La quantité totale de beurre de cacao étant comprise entre 5% et 25% en poids par rapport au poids total du chocolat enrichi en protéines, préférentiellement entre 8% et 21%, encore plus préférentiellement entre 11% et 17%.

Toutes les caractéristiques techniques décrites ci-dessus pour les différents ingrédients (nature et quantités) s'appliquent aussi au procédé objet de la présente invention.

La quantité partielle de beurre de cacao mise en œuvre dans l'étape 1 est préférentiellement comprise entre 10% et 90%, 15% et 85%, 20% et 80%, 25% et 75%, 30% et 70%, 35% et 65%, 40% et 60%, 45% et 55% de la quantité totale de beurre de cacao mise en œuvre pour le chocolat enrichi en protéines.

Dans un mode préférentiel, les protéines de l'étape 1 sont des protéines végétales, préférentiellement des protéines végétales issues de légumineuses, encore plus préférentiellement des protéines issues du pois.

Le mélange beurre de cacao et protéines de l'étape 1 est composé de 35% et 55% en poids du beurre de cacao, préférentiellement entre 40% et 50%, plus préférentiellement entre 45% et 50%, par rapport au poids total du mélange et d'une quantité de protéines permettant d'obtenir une teneur finale comprise entre 20% et 40%, préférentiellement entre 25 et 35% en poids sec de protéines par rapport au poids sec total du chocolat enrichi c'est-à-dire du produit fini

Par « beurre de cacao », on comprend ici le mélange de graisse semi-solide et semi-liquide issue de l'extraction de fèves de cacao.

L'étape 2 va permettre un broyage fin des protéines en mélange intime avec le beurre de cacao. Sans être lié par une quelconque théorie, il apparait que c'est ce broyage intime d'un mélange constitué uniquement de protéines et de beurre de cacao qui va permettre ensuite d'obtenir un chocolat qui possède une excellente qualité organoleptique, en particulier sans sensation sableuse ou pâteuse lors de la dégustation, avec une présence limitée/ un goût limité d'arôme pois.

Les appareillages dits « tri-cylindre » ou « bi-cylindre » sont bien connus de l'homme du métier. Alternativement on peut utiliser des broyeurs à billes ou tout autre outil qui permet de réduire la granulométrie de la partie insoluble.

Après le mélange des ingrédients, le produit pâteux est raffiné par le broyage. Le but de cette opération est de raffiner les particules solides de manière à ce qu'elles ne soient plus perceptibles au palais. On reconnait classiquement dans le métier de la chocolaterie qu'une taille inférieure à 60µm, encore plus préférentiellement inférieure à 30µm participe à l'élimination de la sensation sableuse. Ceci est vrai pour la chocolaterie standard, mais cela ne suffit plus lorsque l'on veut enrichir le chocolat à plus de 20% de protéines ou que le chocolat produit fini renferme plus de 30% en poids de protéines. En fonction des appareils, il peut y avoir de un à trois passages dans le tri-cylindre afin d'obtenir la granulométrie souhaitée.

En broyant de manière séparée les protéines et une partie du beurre cacao, puis le chocolat avec le reste beurre de cacao, avant de procéder au mélange de ces deux mélanges, il est désormais possible d'obtenir un chocolat enrichi à plus de 20% de protéines qui présente une excellente qualité organoleptique.

Le chocolat mis en œuvre dans le second mélange à l'étape 3 est un chocolat du commerce, ou un chocolat que l'on a fabriqué ou que l'on fabrique en parallèle. Il peut s'agir indifféremment d'un chocolat noir ou chocolat au lait.

En réalisant un mélange tel que pratiqué dans l'art antérieur (mélange de tous les constituants), et malgré un passage sur le broyage tri-cylindre, il sera impossible d'obtenir un résultat sensoriel standard avec une recette enrichie en protéines.

L'étape 3 consiste en la réalisation d'un second mélange composé d'une quantité de chocolat représentant entre 30% et 50% du poids de la recette finale, du chocolat enrichi en protéines, préférentiellement entre 35% et 45%, et de la quantité restante du beurre de cacao, après soustraction de la quantité mise en oeuvre dans l'étape 1.

Dans un mode alternatif de cette étape, les ingrédients nécessaires à la fabrication du chocolat sont utilisés à la place d'un chocolat fini (commercial ou préparé par nos soins), après broyage sur un broyeur adapté à l'affinage de chocolat, préférentiellement un appareillage dit bi ou tri-cylindre.

L'étape 4 consiste en une fonte par chauffage des deux mélanges précédents, sous agitation dans tout récipient adapté à cet effet, par exemple un bol mélangeur thermostaté. Le chocolat peut être obtenu commercialement, préférentiellement un chocolat noir. Le chocolat peut également être fabriqué, en parallèle selon les procédures classiques de la chocolaterie. Il est ici important de ne jamais introduire directement tout ou partie des protéines, sous risque d'entrainer une dégradation organoleptique du chocolat, particulièrement une apparition de sensation sableuse ou pâteuse lors de la dégustation, avec libération d'arôme pois.

L'étape 5 concerne la diminution de la température à 50°C après ajout d'émulsifiants (préférentiellement lécithine végétales, de soja et PGPR) dans ce même bol mélangeur.

L'étape 6 consiste à mélanger pour obtenir un mélange homogène, par exemple pendant 30 minutes à 50°C.

L'étape 7 concerne ensuite le tempérage réalisé selon les procédés classiques de l'art, de manière manuelle sur un marbre ou dans un appareillage automatique dédié.

Après tempérage, le chocolat enrichi en protéines est introduit dans des moules choisis selon la forme désirée et laissé à refroidir à température ambiante. Il peut aussi être utilisé en enrobage, talonnage ou pour la création de coque de chocolats pour bonbons chocolat.

La présente invention sera mieux comprise par la lecture des exemples non-exhaustifs ci-dessous.

### EXEMPLES

### Exemple 1 : Production de chocolat selon l'art antérieur - chocolat au lait de l'art antérieur n° 1 :

Un chocolat classique, non enrichi en protéine, servira de référence organoleptique. On utilisera le procédé intitulé « TEMOIN : CHOCOLAT AU LAIT TRADITIONNEL » de l'exemple 1 de la demande WO2011/095740.

### Exemple 2 : Production de chocolat enrichi à plus de 30% de protéines selon les procédés de l'art antérieur- chocolat au lait de l'art antérieur n°2

Cet exemple se propose de réaliser un chocolat enrichi à plus de 30% de protéines produit selon le procédé de l'art antérieur c.à.d. en mélangeant dès le début l'intégralité des composants, protéines incluses.

Afin de produire le chocolat, le tableau ci-dessous résume les ingrédients mis en œuvre.
Le chocolat noir CHD-Q11-105 est un chocolat noir produit par BARRY CALLEBAUT, contenant minimum 54,1% de matière sèche issue du cacao
Le NUTRALYS^{®} XF est un isolat de protéine de pois commercialisé par Roquette contenant environ 85% de protéines
Lactosérum Instantwhey (450) est un lactosérum produit par Fonterra, contenant 80% de protéines.

Le Noir absolu EBONY est une masse de cacao commercialisée par Puratos, son ajout permet de renforcer l'arôme chocolat.

La lécithine de soja est un émulsifiant naturel, extrait du soja.

ADMUL WOL 1403 est également un émulsifiant. Produit par Kerry, il est composé de polyglycérol polyricinoléates.

| | Poids (en g) | Composition (en %) |
|---|---|---|
| Chocolat noir (CHD-Q11-105) | 390,000 g | 38,883 |
| NUTRALYS^{®} XF (ROQUETTE) | 200,000 g | 19,940 |
| Lactosérum Instantwhey (450) | 184,000 g | 18,345 |
| Beurre de cacao | 176,500 g | 17,597 |
| Lait demi-écrémé | 30,000 g | 2,991 |
| Masse de cacao, Noir absolu EBONY (54% MG) | 15,000 g | 1,496 |
| Lécithine de soja | 4,500 g | 0,449 |
| ADMUL WOL 1403 | 3,000 g | 0,299 |
| Total | 1003,00 | 100,000 |

| | | |
|---|---|---|
| Total protéines : 32% | | |

Le protocole pour réaliser ce chocolat, chocolat au lait de l'art antérieur n°2, est le suivant :
1. Malaxage de l'intégralité des ingrédients du tableau 1 à 40°C
2. Broyage (sur broyeuse tri-cylindres) : pression des rouleaux : 1^{er} passage à 20-30 bars, 2^{ème} passage à 35-45 bars, 3^{ème} passage à 55-60 bars.
3. « Conchage » : température 60 °C, durée 20 h
4. Refroidissement à 50°C
5. Tempérage, et coulage dans des moules

### Exemple 3 : Production de chocolat enrichi à plus de 30% de protéines selon le procédé de l'invention- Chocolat n ° 3 :

Cet exemple se propose de réaliser un chocolat enrichi à plus de 30% de protéines produit selon le procédé de l'invention c.à.d. en mélangeant et broyant séparément un mix protéines/beurre de cacao, avant de le mélanger avec un chocolat fabriqué à part selon un procédé classique.

Les ingrédients et quantités mis en œuvre sont ceux-déjà décrits dans l'exemple 2 ci-dessus.

Le protocole pour réaliser ce chocolat est le suivant :
1. Mélange des protéines (NUTRALYS^{®} XF et lactosérum) avec la moitié de la quantité de beurre de cacao à 40°C
2. Mélange séparé des autres ingrédients restants à 40°C, à l'exception de la lécithine de soja et de l'ADMUL WOL 1403 (émulsifiants)
3. Broyage séparé des deux mélanges (sur broyeuse tri-cylindres) : pression des rouleaux : 1^{er} passage à 20-30 bars, 2^{ème} passage à 35-45 bars, 3^{ème} passage à 55-60 bars.
4. Chauffe séparée ou « conchage » des deux mélanges à 60°C sous agitation jusqu'à obtention d'un mélange homogène, conditions mise en œuvre pour le « Conchage » : température 60 °C, durée 20 h pour le second mélange et de 4h pour le premier contenant les protéines.
5. Mélange des deux pâtes conchées
6. Refroidissement à 50°C
7. Tempérage, et coulage dans des moules

On peut déjà remarquer qu'en utilisant un chocolat tout prêt, et donc déjà conché, à la place du second mélange, il est possible de réduire le temps de conchage à uniquement 4h.

### Exemple 4 : Production de chocolat enrichi à plus de 30% de protéines exclusivement végétales selon les procédés de l'art antérieur- chocolat au lait de l'art antérieur n°4

Cet exemple se propose de réaliser un chocolat enrichi à plus de 30% de protéines exclusivement végétales produit selon le procédé de l'art antérieur c.à.d. en mélangeant dès le début l'intégralité des composants, protéines incluses.

Afin de produire le chocolat, le tableau ci-dessous résume les ingrédients mis en oeuvre.

Le chocolat noir CHD-Q11-105 est un chocolat noir produit par BARRY CALLEBAUT, contenant minimum 54,1% de matière sèche issue du cacao
Le NUTRALYS^{®} S85Plus-N est un isolat de protéine de pois commercialisé par Roquette contenant environ 85% de protéines
Lactosérum Instantwhey (450) est un lactosérum produit par Fonterra, contenant 80% de protéines.

Le Noir absolu EBONY est une masse de cacao commercialisée par Puratos, son ajout permet de renforcer l'arôme chocolat.

La lécithine de soja est un émulsifiant naturel, extrait du soja.

ADMUL WOL 1403 est également un émulsifiant. Produit par Kerry, il est composé de polyglycérol polyricinoléates.

| | Poids (en g) | Composition (en %) |
|---|---|---|
| Chocolat noir (CHD-Q11-105) | 476,7 | 47,67 |
| NUTRALYS^{®} S85Plus-N (ROQUETTE) | 339,0 | 33,90 |
| Beurre de cacao | 164 | 16,4 |
| Masse de cacao, Noir absolu EBONY (54% MG) | 15,4 | 1,54 |
| Lécithine de soja | 4,7 | 0,47 |
| Total | 999,8 | 100,0 |

| | | |
|---|---|---|
| Total protéines : 33,9% | | |

Le protocole pour réaliser ce chocolat (chocolat au lait de l'art antérieur n°4) est le suivant :
1. Malaxage de l'intégralité des ingrédients du tableau 1 à 40°C
2. Broyage (sur broyeuse tri-cylindres) : pression des rouleaux : 1^{ar} passage à 20-30 bars, 2^{ème} passage à 35-45 bars, 3^{ème} passage à 55-60 bars.
3. « Conchage » : température 60 °C, durée 20 h
4. Refroidissement à 50°C
5. Tempérage, et coulage dans des moules

### Exemple 5 : Production de chocolat enrichi à plus de 30% de protéines exclusivement végétales selon le procédé de l'invention- Chocolat n° 5 :

Cet exemple se propose de réaliser un chocolat enrichi à plus de 30% de protéines exclusivement végétales produit selon le procédé de l'invention c.à.d. en mélangeant et broyant séparément un mix protéines/beurre de cacao, avant de le mélanger avec un chocolat fabriqué à part selon un procédé classique.

Les ingrédients et quantités mis en œuvre sont ceux-déjà décrits dans l'exemple 4 ci-dessus.

Le protocole pour réaliser ce chocolat (chocolat n°5) est le suivant :
1. Mélange de la protéine (NUTRALYS^{®} S85plus-N) avec la moitié de la quantité de beurre de cacao à 40°C
2. Mélange séparé des autres ingrédients restants à 40°C, à l'exception de la lécithine de soja
3. Broyage séparé des deux mélanges (sur broyeuse tri-cylindres) : pression des rouleaux : 1^{er} passage à 20-30 bars, 2^{ème} passage à 35-45 bars, 3^{ème} passage à 55-60 bars.
4. Chauffe séparée ou « conchage » des deux mélanges à 60°C sous agitation jusqu'à obtention d'un mélange homogène, conditions mise en œuvre pour le « Conchage » : température 60 °C, durée 20 h pour le second mélange et de 4h pour le premier contenant les protéines.
5. Mélange des deux pâtes conchées
6. Refroidissement à 50°C
7. Tempérage, et coulage dans des moules

On peut déjà remarquer qu'en utilisant un chocolat tout prêt, et donc déjà conché, à la place du second mélange, il est possible de réduire le temps de conchage à uniquement 4h.

### Exemple 6 : Comparaison des chocolats obtenus dans les exemples ci-dessus

Les cinq échantillons de chocolat « au lait », la référence (n°1), deux produits selon un procédé de l'art antérieur (n°2 et n°4) et deux avec un procédé selon l'invention (n°3 et n°5), ont été goûtés en aveugle par un jury d'experts en analyse sensorielle de 20 personnes. Un chocolat enrichi en protéines du marché MyProtein^{®}, enrichi à 20% en protéines, est également testé.

Le premier test consistait en un test triangulaire où sur les trois échantillons proposés deux étaient identiques.

83% des personnes ayant participé au test n'ont pas pu distinguer de différence entre le chocolat 1 (référence pauvre en protéines) et 3 (invention enrichie en protéines).

Le second test, toujours réalisé en aveugle, consistait à déguster les cinq échantillons et à les décrire.

La dégustation est une opération qui consiste à expérimenter, analyser et apprécier les caractères organoleptiques et plus particulièrement les caractères organo-olfactifs d'un produit. La dégustation fait appel aux sens visuel, tactile, olfactif et gustatif. Pour cette dégustation, les qualificatifs employés étaient identiques pour les chocolats selon l'art antérieur ou selon l'invention (chocolats 1 à 5):
1. Test d'observation : surface du chocolat lisse, moirée et légèrement brillante ;
2. Test tactile : surface lisse, dure.
3. Test olfactif : odeur douce, fruitée, très agréable.
4. Test gustatif : onctuosité, rondeur en bouche, crémeux, absence de sableux, fonte en bouche.

Ces différents tests d'analyse sensorielle démontrent parfaitement que le jury entraîné n'a pas su faire de différence entre le chocolat référence (n°1) et les chocolats enrichis en protéines obtenus avec un procédé selon l'invention (n°3 et n°5). Par contre, un aspect sableux a été relevé pour les chocolats obtenus avec un procédé selon l'art antérieur (n°2 et n°4) et le chocolat commercial MyProtein^{®}. L'intérêt de l'invention est par conséquent démontré.

Cette invention va permettre notamment aux personnes allergiques aux protéines laitières de pouvoir déguster des chocolats aussi bons et onctueux que leurs équivalents. Ce chocolat est également d'intérêt pour les personnes faisant du sport intensif ou cherchant à diminuer l'apport de sucre et de matières grasses.

Le présent exemple montre de plus qu'un enrichissement en protéines est possible. Ainsi les chocolats n°3 et n°5 contiennent plus de protéines que le chocolat témoin, et la mention « source de protéines », voire « riche en protéines », pourra être indiquée sur son emballage.

L'invention est également intéressante d'un point de vue rhéologique. En effet, la viscosité est un facteur critique chez les industriels du chocolat.

Des mesures de viscosité ont été effectuées à 40 °C sur un rhéomètre Physica MCR 301 selon la norme en vigueur chez les chocolatiers (norme AIOCC).

Appareil utilisé : Rhéomètre à déformation imposée (PHYSICAC, 10 MCR301 - Anton Paar) avec une géométrie en Cylindres coaxiaux (diamètre 34mm extérieur et 32 mm intérieur.)
- Température : 40°C
- Pré-cisaillement : 10 mn à 5s-1
- Gradient de cisaillement 1 à 50 s en 3 mn
- Maintien du cisaillement 1 mn à 50 s-1
- Descente cisaillement : 50 à 1 s-1 en 3 mn

Les résultats sont exprimés après une modélisation selon la méthode dite de Casson, de la courbe de retour (descente cisaillement). Cette méthodologie respecte l'exigence de la norme ICA 46.

Le tableau ci-dessous présente la Viscosité Casson (Pa.s) et le Seuil d'écoulement (Pa).

| | Viscosité (Pa.s) | Seuil écoulement (Pa) |
|---|---|---|
| Chocolat du marché enrichi en protéines à 20% (MyProtein^{®}) | 6,9 | 38,4 |
| Chocolat selon l'art antérieur (exemple 1) | 1,5 | 6,8 |
| Chocolat enrichi en protéines, réalisé selon l'art antérieur (exemple 2, chocolat n°2) | 8,6 | 2,9 |
| Chocolat enrichi en protéines, réalisé selon l'invention, (exemple 3, chocolat n°3) | 3,98 | 15 |
| Chocolat enrichi en protéines exclusivement végétales, réalisé selon l'art antérieur (exemple 4, chocolat n°4) | 7 | 48 |
| Chocolat enrichi en protéines exclusivement végétales, réalisé selon l'invention (exemple 5, chocolat n°5) | 5,8 | 29 |

Le tableau ci-dessus montre bien que la viscosité du chocolat selon l'invention est plus proche du chocolat selon l'art antérieur n°1. Il est donc plus aisé pour le chocolatier de manipuler la masse en cours de procédé.

## Revendications

1. Chocolat enrichi en protéines comprenant :
- entre 20% et 40% de protéines, et
- entre 5% et 25% de beurre de cacao,
% exprimés en poids sec par rapport au poids sec total du chocolat enrichi en protéines,
- lesdites protéines étant des protéines de légumineuses ou un mélange de protéines de légumineuses et de protéines d'origines laitières,
- ledit chocolat présentant une viscosité Casson inférieure à 6 Pa.s.

2. Chocolat enrichi en protéines selon la revendication 1 **caractérisé en ce que** sa viscosité Casson est comprise entre 1 et 6 Pa.s, préférentiellement entre 3 et 6 Pa.s.

3. Chocolat enrichi en protéines selon la revendication 1 ou 2, dans lequel les protéines de légumineuses sont des protéines de pois.

4. Chocolat enrichi en protéines selon la revendication 1 ou 2, dans lequel les protéines d'origines laitières sont des protéines de lactosérum.

5. Chocolat enrichi en protéines selon les revendications 1 ou 2, dans lequel les protéines sont uniquement des protéines de pois.

6. Chocolat enrichi en protéines selon les revendications 1 ou 2, dans lequel les protéines sont un mélange de protéines de pois et de protéines d'origines laitières.

7. Chocolat enrichi en protéines selon les revendications 1 ou 2, dans lequel le mélange de protéines de légumineuses et de protéines d'origines laitières comprend au moins 40%, de préférence entre 40% et 60%, préférentiellement encore entre 45% et 55% de protéines de légumineuses, % exprimé en poids du mélange de protéines de légumineuses et de protéines d'origine laitière.

8. Chocolat enrichi en protéines selon l'une quelconque des revendications précédentes, contenant entre 25 et 35% de protéines, % exprimé en poids sec par rapport au poids sec total du chocolat enrichi en protéines.

9. Chocolat enrichi en protéines selon l'une quelconque des revendications précédentes, contenant entre 8% et 21%, de préférence entre 11% et 17% de beurre de cacao, % exprimé en poids sec par rapport au poids sec total du chocolat enrichi en protéines.

10. Procédé de préparation du chocolat enrichi selon l'une quelconque des revendications précédentes, **caractérisé en ce qu'**il comprend les étapes suivantes :
1. Réalisation d'un premier mélange composé
i. d'une partie de la quantité totale du beurre de cacao mise en œuvre dans le procédé ;
ii. et d'une quantité de protéines de manière à obtenir une teneur finale en protéines comprise entre 20% et 40%, préférentiellement entre 25 et 35% en poids sec par rapport au poids total sec du chocolat enrichi en protéines,
2. Broyage du premier mélange par passage sur broyeur adapté à l'affinage de chocolat, préférentiellement un appareillage dit bi ou tri-cylindre
3. Réalisation d'un second mélange composé
i. d'une quantité de chocolat représentant entre 30% et 50%, préférentiellement entre 35% et 45% en poids sec par rapport au poids total sec du chocolat enrichi en protéines
ii. et de la quantité restante du beurre de cacao, après mise en œuvre de la quantité de l'étape 1
4. Chauffage des deux mélanges à environ 60°C de manière à obtenir la fonte des mélanges, deux mélanges homogènes
5. Mélange intime des deux mélanges à 60°C, préférentiellement pendant un temps compris entre 1 heure et 5 heures, plus préférentiellement entre 2h et 4h, encore plus préférentiellement pendant 3,5 heures
6. Refroidissement à 50°C de la température du mélange obtenu à l'étape 5 et ajout d'un ou de plusieurs émulsifiants, préférentiellement de la lécithine végétale
7. Tempérage du mélange
8. Coulage du mélange dans les moules
la quantité totale de beurre de cacao étant comprise entre 5% et 25%, préférentiellement entre 8% et 21%, préférentiellement encore entre 11% et 17%, en poids sec par rapport au poids total du chocolat enrichi en protéines.

## Patentansprüche

1. Mit Proteinen angereicherte Schokolade, umfassend:
- zwischen 20 % und 40 % Proteinen, und
- zwischen 5 % und 25 % Kakaobutter,
- wobei die Prozentangaben als Trockengewicht bezogen auf das Gesamttrockengewicht der mit Proteinen angereicherten Schokolade angegeben sind,
- wobei es sich bei den Proteinen um Hülsenfrüchteproteine oder eine Mischung aus Hülsenfrüchteproteinen und Proteinen aus Milchprodukten handelt,
- wobei die Schokolade eine Casson-Viskosität von weniger als 6 Pa.s aufweist.

2. Mit Proteinen angereicherte Schokolade nach Anspruch 1, **dadurch gekennzeichnet, dass** ihre Casson-Viskosität zwischen 1 und 6 Pa.s, bevorzugt zwischen 3 und 6 Pa.s, liegt.

3. Mit Proteinen angereicherte Schokolade nach Anspruch 1 oder 2, wobei die Hülsenfruchtproteine Erbsenproteine sind.

4. Mit Proteinen angereicherte Schokolade nach Anspruch 1 oder 2, wobei die Milchproteine Molkenproteine sind.

5. Mit Proteinen angereicherte Schokolade nach den Ansprüchen 1 oder 2, wobei die Proteine ausschließlich Erbsenproteine sind.

6. Mit Proteinen angereicherte Schokolade nach den Ansprüchen 1 oder 2, wobei die Proteine eine Mischung aus Erbsenproteinen und Proteinen aus Milchprodukten sind.

7. Mit Proteinen angereicherte Schokolade nach den Ansprüchen 1 oder 2, wobei die Mischung aus Leguminosenproteinen und Proteinen aus Milchprodukten mindestens 40 %, bevorzugt zwischen 40 % und 60 %, stärker bevorzugt zwischen 45 % und 55 % Hülsenfrüchteproteine umfasst, ausgedrückt in Gewichtsprozent der Mischung aus Hülsenfrüchteproteinen und Milchproteinen.

8. Mit Proteinen angereicherte Schokolade nach einem der vorhergehenden Ansprüche, die zwischen 25 und 35 % Proteine enthält, ausgedrückt in Trockengewichtsprozent bezogen auf das Gesamttrockengewicht der mit Proteinen angereicherten Schokolade.

9. Mit Proteinen angereicherte Schokolade nach einem der vorhergehenden Ansprüche, die zwischen 8 % und 21 %, bevorzugt zwischen 11 % und 17 % Kakaobutter enthält, wobei der Prozentsatz als Trockengewicht bezogen auf das Gesamt-Trockengewicht der mit Proteinen angereicherten Schokolade angegeben ist.

10. Verfahren zur Herstellung der angereicherten Schokolade nach einem der vorhergehenden Ansprüche, **dadurch gekennzeichnet, dass** es die folgenden Schritte umfasst:
1. Herstellung einer ersten Mischung aus
i. einem Teil der Gesamtmenge der in dem Verfahren verwendeten Kakaobutter;
ii. und einer Menge an Proteinen, so dass ein Endproteingehalt zwischen 20 % und 40 %, bevorzugt zwischen 25 % und 35 % Trockengewicht, bezogen auf das Gesamt-Trockengewicht der mit Proteinen angereicherten Schokolade, erhalten wird,
2. Zerkleinern der ersten Mischung durch Durchlaufen einer für die Veredelung von Schokolade geeigneten Mühle, bevorzugt einer sogenannten Zwei- oder Dreizylindermühle,
3. Herstellung einer zweiten Mischung aus
i. einer Schokoladenmenge zwischen 30 % und 50 %, bevorzugt zwischen 35 % und 45 % Trockengewicht, bezogen auf das Gesamt-Trockengewicht der mit Proteinen angereicherten Schokolade,
ii. und der restlichen Menge an Kakaobutter nach Zugabe der Menge aus Schritt 1,
4. Erhitzen der beiden Mischungen auf etwa 60 °C, um das Schmelzen der Mischungen zu erreichen, zwei homogene Mischungen,
5. Gründliches Mischen der beiden Mischungen bei 60 °C, bevorzugt für eine Zeit zwischen 1 Stunde und 5 Stunden, stärker bevorzugt zwischen 2 Stunden und 4 Stunden, am stärksten bevorzugt für 3,5 Stunden,
6. Abkühlen der in Schritt 5 erhaltenen Mischung auf 50 °C und Zugabe eines oder mehrerer Emulgatoren, bevorzugt pflanzliches Lecithin,
7. Temperieren der Mischung,
8. Gießen der Mischung in Formen,
wobei die Gesamtmenge an Kakaobutter zwischen 5 % und 25 %, bevorzugt zwischen 8 % und 21 %, stärker bevorzugt zwischen 11 % und 17 % Trockengewicht bezogen auf das Gesamtgewicht der mit Proteinen angereicherten Schokolade beträgt.

## Claims

1. A protein-enriched chocolate comprising:
- between 20% and 40% protein, and
- between 5% and 25% cocoa butter,
with the % expressed by dry weight in relation to the total dry weight of the protein-enriched chocolate,
- said proteins being proteins derived from leguminous plants or a mixture of proteins derived from leguminous plants and proteins of dairy origin,
- said chocolate having a Casson viscosity less than 6 Pa.s.

2. The protein-enriched chocolate according to claim 1, **characterised in that** its Casson viscosity is between 1 and 6 Pa.s, preferably between 3 and 6 Pa.s.

3. The protein-enriched chocolate according to claim 1 or 2, wherein the proteins derived from leguminous plants are pea proteins.

4. The protein-enriched chocolate according to claim 1 or 2, wherein the proteins of dairy origin are whey proteins.

5. The protein-enriched chocolate according to claims 1 or 2, wherein the proteins are solely pea proteins.

6. The protein-enriched chocolate according to claims 1 or 2, wherein the proteins are a blend of pea proteins and proteins of dairy origin.

7. The protein-enriched chocolate according to claims 1 or 2, wherein the mixture of proteins derived from leguminous plants and proteins of dairy origin comprises at least 40%, preferably between 40% and 60%, and more preferably between 45% and 55% of proteins derived from leguminous plants, with the % expressed by weight of the mixture of proteins derived from leguminous plants and proteins of dairy origin.

8. The protein-enriched chocolate according to any of the preceding claims, containing between 25% and 35% protein, with the % expressed in dry weight relative to the total dry weight of the protein-enriched chocolate.

9. The protein-enriched chocolate according to any of the preceding claims, containing between 8% and 21%, preferably between 11% and 17% cocoa butter, with the % expressed in dry weight relative to total dry weight of the protein-enriched chocolate.

10. A method for manufacturing the enriched chocolate according to any one of the preceding claims, **characterised in that** it comprises the following steps:
1. Making a first mixture comprised
i. of a part of the total amount of the cocoa butter implemented in the method;
ii. and of an amount of protein so as to achieve a final protein content of between 20% and 40%, preferably between 25% and 35% by dry weight relative to the total dry weight of the protein-enriched chocolate,
2. Milling the first mixture using a mill suitable for refining chocolate, preferably a so-called two- or three-roll machine
3. Making a second mixture comprised
i. of an amount of chocolate representing between 30% and 50%, preferably between 35% and 45% by dry weight relative to the total dry weight of the protein-enriched chocolate
ii. and of the remaining amount of cocoa butter, after implementing the amount of step 1
4. Heating the two mixtures to about 60°C so as to achieve melting of the mixtures, two homogeneous mixtures
5. Thoroughly mixing the two mixtures at 60°C, preferably for a time of between 1 hour and 5 hours, more preferably between 2 hours and 4 hours, and even more preferably for 3.5 hours
6. Lowering to 50°C the temperature of the mixture obtained in step 5 and adding one or more emulsifiers, preferably vegetable lecithin
7. Tempering the mixture
8. Pouring the mixture into moulds
the total amount of cocoa butter being between 5% and 25%, preferably between 8% and 21%, preferably between 11% and 17%, by dry weight relative to the total weight of the protein-enriched chocolate.
